Europäisches Patentamt

European Patent Office

Office européen des brevets

(19)

(11) EP 0 859 482 B1

(12) FASCICULE DE BREVET EUROPEEN

(45) Date de publication et mention
de la délivrance du brevet:
**12.01.2000 Bulletin 2000/02**

(51) Int Cl.⁷: $H04B\ 10/18$

(21) Numéro de dépôt: 98400351.7

(22) Date de dépôt: 16.02.1998

(54) **Régénération optique pour des systèmes de transmission à fibre optique à signaux solitons et à multiplexage de longueur d'onde**

Optischer Regenerator für Soliton faseroptische WDM Systeme

Optical regeneration for soliton wdm fiberoptic transmission systems

(84) Etats contractants désignés:
**DE ES FR GB IT SE**

(30) Priorité: **18.02.1997 FR 9701901**

(43) Date de publication de la demande:
**19.08.1998 Bulletin 1998/34**

(73) Titulaire: **ALCATEL**
**75008 Paris (FR)**

(72) Inventeurs:
• **Bigo, Sébastien**
**91120 Palaiseau (FR)**
• **Leclerc, Olivier**
**91420 Saint-Michel-Sur-Orge (FR)**

(74) Mandataire: **Lamoureux, Bernard et al**
**COMPAGNIE FINANCIERE ALCATEL**
**Département Propriété Industrielle**
**30, avenue Kléber**
**75116 Paris (FR)**

(56) Documents cités:
**EP-A- 0 718 992**

• **WIDDOWSON T ET AL: "SOLITON SHEPHERDING: ALL-OPTICAL ACTIVE SOLITON CONTROL OVER GLOBAL DISTANCES" ELECTRONICS LETTERS, vol. 30, no. 12, 9 juin 1994, pages 990-991, XP000459799**
• **NAKAZAWA M ET AL: "40GBIT/S WDM (10GBIT/S X 4 UNEQUALLY SPACED CHANNELS) SOLITON TRANSMISSION OVER 10000KM USING SYNCHRONUS MODULATION AND NARROW BAND OPTICAL FILTERING" ELECTRONICS LETTERS, vol. 32, no. 9, 25 avril 1996, pages 828-830, XP000595674**

**Description**

La présente invention a pour objet un système de transmission à fibre optique à signaux solitons et à multiplexage de longueur d'onde, dans lequel les différentes longueurs d'onde du multiplex sont choisies de sorte à assurer, sur un intervalle donné, un glissement relatif entre les différents canaux sensiblement égal à un multiple du temps bit. Elle concerne également un procédé de transmission dans un tel système.

La transmission d'impulsions solitons ou solitons dans la partie d'une fibre optique à dispersion anormale est un phénomène connu. Les solitons sont des signaux impulsionnels de forme $sech^2$. Avec cette forme d'impulsion, la non-linéarité dans la partie correspondante de la fibre compense la dispersion du signal optique. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol. 11 n° 10 pages 665-667. Cet effet, appelé effet Gordon-Haus, impose une limite théorique à la qualité ou au débit des transmissions par solitons.

Pour arriver à dépasser cette limite, il est possible d'utiliser une modulation synchrone des signaux solitons, à l'aide de modulateurs semi-conducteurs. Cette technique limite intrinsèquement le débit de la liaison solitons, du fait de la limite supérieure de la bande passante des modulateurs semi-conducteurs. Il a aussi été proposé des systèmes de filtres guidants glissants, permettant de contrôler la gigue des solitons transmis, voir par exemple EP-A-0 576 208.

Il a enfin été proposé, pour assurer la régénération du signal sur la ligne, d'utiliser l'effet Kerr dans des modulateurs synchrones d'amplitude ou de phase. Ces techniques nécessitent des composants haute fréquence, d'où l'intérêt des approches tout-optiques. A cet effet, on peut utiliser pour la modulation d'amplitude, un miroir non linéaire en boucle (NOLM), et pour la modulation de phase, la fibre elle-même. Ainsi, une présentation de S. Bigo, P. Brindel. O. Leclerc, aux Journées nationales de l'Optique guidée, 30 octobre 1996, à Nice (France), décrit une régénération d'un signal soliton par modulation de phase tout-optique. On superpose au signal soliton une horloge optique, qui imprime un déphasage non linéaire au impulsions du signal soliton, en se copropageant avec elles dans une fibre optique dont un tronçon a été sélectionné de sorte à minimiser les effets du glissement entre le signal soliton et l'horloge optique. On pourra consulter T. Widdowson et al., Soliton shepherding : all optical active soliton control over global distances, IEE Electron. Letters. vol. 30 n° 12 p. 990 (1994).

Il a aussi été proposé, pour augmenter le débit des systèmes de transmission à fibre optique à signaux solitons d'utiliser un multiplexage de longueur d'onde. Dans ce cas, il est considéré comme avantageux d'utiliser des filtres guidants glissants du type Fabry Perot, qui sont entièrement compatibles avec des signaux mutliplexés en longueur d'onde. En revanche, l'utilisation de modulateurs synchrones pour la régénération de signaux solitons multiplexés en longueur d'onde est problématique, du fait de la différence de vitesse de groupe entre les signaux des différents canaux.

Un article de E. Desurvire, O. Leclerc et O. Audouin, Optics Letters, vol. 21, n° 14 décrit un schéma d'allocation des longueurs d'ondes, qui soit compatible avec l'utilisation de modulateurs synchrones. Cet article propose d'allouer des longueurs d'ondes aux différents canaux du multiplex de telle sorte que, pour des intervalles donnés entre les répéteurs, les signaux des différents canaux soient synchronisés en arrivant aux répéteurs. On permet ainsi une modulation synchrone en ligne de tous les canaux, à des intervalles donnés, à l'aide de modulateurs discrets. Cet article précise une valeur maximale de variation relative de positionnement des répéteurs de $5.10^{-3}$. qui permet d'assurer que la variation relative du temps bit reste inférieure à 5%, pour 5 canaux. Cette technique n'est donc pas susceptible d'être appliquée directement à des modulateurs tout-optique utilisant l'effet Kerr ou distribués, du fait que la dispersion dans la fibre provoque du glissement entre les différents canaux et l'horloge assurant la modulation.

Il a aussi été montré, voir S. Bigo, *Traitement de signal tout-optique pour la transmission à très haut débit de solitons par fibre optique,* Mémoire de thèse, Université de Besançon, 1996, qu'un modulateur tout-optique utilisant l'effet Kerr, tel qu'un NOLM ou une fibre, peut être considéré comme un modulateur sinusoïdal discret synchronisé avec le train de solitons, malgré le glissement ("walkoff") dû à la dispersion chromatique et les pertes, lorsque l'horloge utilisée est sinusoïdale, et que l'on ajuste le décalage temporel entre le signal à moduler et l'horloge.

La présente invention propose une solution originale et simple au problème de la modulation tout-optique de signaux solitons multiplexés en longueur d'onde. Elle permet d'appliquer les solutions connues de modulation optique distribuée en amplitude ou en phase, à des signaux solitons multiplexés en longueur d'onde, malgré le glissement provoqué par les différences entre les vitesses de groupe.

Plus précisément, l'invention propose un système de transmission à fibre optique à signaux solitons et à multiplexage de longueur d'onde, dans lequel les différentes longueurs d'onde du multiplex sont choisies de sorte à assurer, sur un intervalle $Z_R$ donné, un glissement relatif entre les différents canaux sensiblement égal à un multiple du temps bit $1/B$, caractérisé en ce qu'en au moins un point du système de transmission, les impulsions solitons des différents canaux présentent par rapport à une référence donnée un décalage temporel tel que, lors d'une modulation optique distribuée par une horloge introduite audit point, pour chaque canal, l'extremum du profil de phase non linéaire induit par l'horloge, intégré sur la longueur de modulation coïncide avec le centre du temps bit.

Dans un mode de réalisation, pour toute longueur d'onde $\lambda_i$ du multiplex, la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

avec $k_i$ un entier dépendant du canal, et T le temps bit.

On peut prévoir au moins deux dispositifs de modulation optique distribuée séparés le long du système de transmission par une distance multiple dudit intervalle $Z_R$.

Dans un mode de réalisation, le dispositif de modulation optique comprend

- des moyens pour filtrer une partie desdits canaux
- des moyens de récupération d'une horloge sinusoïdale à partir du signal filtré, et
- des moyens pour coupler l'horloge dans la fibre.

Dans ce cas, le décalage temporel $\Delta_i$ pour chaque canal i peut être donné par la formule:

$$\Delta_i = \frac{-1}{2\pi B}\left\{\arctan\left[\frac{\sin(2\pi B\tau_i)}{\cos(2\pi B\tau_i) - 1/\Gamma}\right] - \arctan\left[\frac{2\pi B\tau_i}{Ln(\Gamma)}\right]\right\}$$

dans laquelle $\Gamma$ représente la perte totale dans la fibre sur la longueur de l'intervalle $Z_R$; et $\tau_i$ représente le glissement relatif entre le canal i et l'horloge sur l'intervalle $Z_R$, normalisé par le débit bit B.

Le dispositif de modulation optique peut aussi comprendre:

- des moyens pour filtrer une partie desdits canaux
- des moyens de récupération d'une horloge sinusoïdale à partir du signal filtré;
- un miroir non linéaire en boucle dans lequel passent les signaux solitons des différents canaux, et
- des moyens pour coupler l'horloge dans le miroir non linéaire en boucle.

Dans ce cas, le décalage temporel $\Delta_i$ pour chaque canal i est avantageusement donné par la formule:

$$\Delta_i = \frac{-1}{\pi B}\left\{\arctan\left[\frac{\sin(\pi B\tau_i)}{\cos(\pi B\tau_i) - 1/\Gamma}\right] - \arctan\left[\frac{\pi B\tau_i}{Ln(\Gamma)}\right]\right\}$$

dans laquelle $\Gamma$ représente la perte totale dans la fibre du miroir: et $\tau_i$ représente le glissement relatif entre le canal i et l'horloge dans le miroir, normalisé par le débit bit B.

De préférence, le système comprend au moins un filtre présentant une fonction de transfert compensant l'affaiblissement relatif des différents canaux provoqué par la modulation dans le dispositif de modulation optique, par exemple un filtre de Bragg.

Dans le cas du NOLM, on peut disposer chaque filtre en sortie d'un miroir non-linéaire en boucle, de sorte à assurer en outre la séparation des signaux solitons et de l'horloge.

Le système peut aussi présenter au moins un filtre guidant.

L'invention propose aussi un procédé de transmission dans un système à fibre optique à signaux solitons et à multiplexage de longueur d'onde, dans lequel les différentes longueurs d'onde du multiplex sont choisies de sorte à assurer, sur un intervalle $Z_R$ donné, un glissement relatif entre les différents canaux sensiblement égal à un multiple du temps bit 1/B, caractérisé par l'émission des impulsions solitons des différents canaux de sorte qu'en au moins un point du système de transmission, elles présentent, par rapport à une référence donnée un décalage temporel tel que, lors d'une modulation optique distribuée par une horloge introduite audit point, pour chaque canal, l'extremum du profil de phase non-linéaire induit par l'horloge, intégré sur la longueur de modulation, coïncide avec le centre du temps bit.

Dans un mode de mise en oeuvre, pour toute longueur d'onde $\lambda_i$ du multiplex, la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

$k_i$ étant un entier dépendant du canal.

Avantageusement, on prévoit au moins une étape de modulation optique distribuée, à une distance dudit point multiple de l'intervalle $Z_R$.

L'étape de modulation optique peut comprendre une modulation optique distribuée dans un miroir non-linéaire en boucle ou dans la fibre de transmission, à l'aide d'une horloge sinusoïdale.

Dans le cas d'une modulation optique distribuée dans la fibre de transmission, le décalage temporel $\Delta_i$ pour chaque canal i est par exemple donné par la formule:

$$\Delta = \frac{-1}{2\pi B}\left\{ \arctan\left[\frac{\sin(2\pi B\tau_i)}{\cos(2\pi B\tau_i) - 1/\Gamma}\right] - \arctan\left[\frac{2\pi B\tau}{Ln(\Gamma)}\right]\right\}$$

dans laquelle $\Gamma$ représente la perte totale dans la fibre sur la longueur de l'intervalle $Z_R$; et $\tau_i$ représente le glissement relatif entre le canal i et l'horloge sur l'intervalle $Z_R$, normalisé par le débit bit B.

Dans le cas d'une modulation optique distribuée un miroir non-linéaire en boucle, le décalage temporel $\Delta_i$ pour chaque canal i est avantageusement donné par la formule:

$$\Delta_i = \frac{-1}{\pi B}\left\{ \arctan\left[\frac{\sin(\pi B\tau_i)}{\cos(\pi B\tau_i) - 1/\Gamma}\right] - \arctan\left[\frac{\pi B\tau_i}{Ln(\Gamma)}\right]\right\}$$

dans laquelle $\Gamma$ représente la perte totale dans la fibre du miroir: et $\tau_i$ représente le glissement relatif entre le canal i et l'horloge dans le miroir, normalisé par le débit bit B.

On peut prévoir au moins une étape de filtrage du signal par un filtre présentant une fonction de transfert compensant l'affaiblissement relatif des différents canaux provoqué par l'étape de modulation.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation schématique d'un système de transmission selon un premier mode de réalisation de l'invention;
- figure 2, l'allure des signaux sur deux canaux du système de la figure 1, à l'émission;
- figure 3, l'allure des signaux sur deux canaux du système de la figure 1, au niveau d'un dispositif de modulation, ainsi que l'allure de l'horloge utilisée pour la modulation;
- figure 4 une représentation schématique d'un système de transmission selon un deuxième mode de réalisation de l'invention.

Pour la mise en oeuvre de l'invention, on choisit un schéma d'allocation de longueurs d'ondes assurant, à intervalles réguliers $Z_R$ le long de la fibre, un glissement relatif entre les différents canaux sensiblement égal à un multiple du temps bit. Ceci peut s'exprimer, pour chaque canal, par la formule:

$$(k_i.T - T/4) < \delta\tau_i.Z_R < (k_i.T + T/4)$$

où T est le temps bit, $k_i$ un entier dépendant du canal, et $\delta\tau_i$ le glissement du canal i par rapport au canal 1. Cette formule traduit le fait qu'à des intervalles $Z_R$, les décalages entre les différents canaux provoqués par le glissement sont, à un quart de temps bit près, des multiples entiers du temps bit. On assure ainsi une coïncidence exacte ou quasi exacte des temps bits avec un intervalle de $Z_R$, dans la mesure où les temps bits coïncident exactement ou quasi exactement à l'émission

On pourra notamment utiliser le schéma d'allocation des longueurs d'onde décrit dans l'article de E. Desurvire et al. mentionné plus haut, auquel on se reportera pour plus de précisions quant à ce sujet. Bien entendu, d'autres schémas d'allocation des longueurs d'onde sont possibles.

L'invention propose, dans un système de transmission à fibre optique à signaux solitons et à multiplexage de longueur d'onde, d'associer à un tel schéma d'allocation des fréquences un ensemble de déphasages ou de décalages temporels entre les signaux solitons des différents canaux. Il s'avère qu'un choix approprié de ces déphasages ou de décalages temporels permet d'utiliser une modulation distribuée des impulsions solitons, dans tous les canaux, par une horloge sinusoïdale unique; ce choix de déphasages ou décalages est reproduit à intervalles réguliers le long de la fibre, l'intervalle étant celui du schéma d'allocation des longueurs d'ondes. On peut alors procéder à une modulation optique distribuée des différents canaux du signal multiplexé en longueur d'onde, à chacun ou à certains des intervalles réguliers.

On choisit le décalage relatif des différents canaux de telle sorte que l'extremum du profil de phase non-linéaire induit par l'horloge, intégré sur toute la longueur de modulation, coïncide avec le centre du temps bit, et ce pour chacun des différents canaux du multiplex en longueur d'ondes. Ceci assure que chacun des canaux peut être modulé par un signal sinusoïdal d'horloge unique, indépendamment du glissement entre l'horloge et les signaux des différents canaux.

Une valeur possible des décalages temporels pour assurer cette coïncidence est donné par la formule suivante, dans le cas d'une modulation optique distribuée dans une fibre Kerr:

$$\Delta_i = \frac{-1}{2\pi B}\left\{\arctan\left[\frac{\sin(2\pi B\tau_i)}{\cos(2\pi B\tau_i)-1/\Gamma}\right]-\arctan\left[\frac{2\pi B\tau_i}{Ln(\Gamma)}\right]\right\}$$

dans laquelle $\Delta_i$ représente le décalage du canal i par rapport à une référence donnée; B représente le débit bit, $\Gamma$ la perte totale dans la fibre sur la longueur de l'intervalle $Z_R$; et $\tau_i$ représente le glissement relatif entre le canal i et l'horloge, sur l'intervalle $Z_R$, normalisé par le débit bit.

Pour un miroir non-linéaire en boucle, la valeur possible des décalages temporels est donné par la même formule, mais dans ce cas, B représente la moitié du débit bit; $\Gamma$ la perte dans la fibre du NOLM; et $\tau_i$ le glissement relatif entre le canal i et l'horloge dans le NOLM, normalisé par le débit bit.

L'application de tels déphasages ou décalages temporels à l'émission permet d'appliquer une modulation optique distribuée de tous les canaux par un signal sinusoïdal, qui a un effet identique à celui assuré par un modulateur semi-conducteur discret. Dans la mesure où l'on choisit un schéma d'allocation des longueurs d'ondes des canaux assurant une coïncidence exacte ou quasi-exacte des temps bits périodiquement le long de la fibre de transmission, on peut appliquer une telle modulation optique distribuée périodiquement, à chacun ou à certains des intervalles $Z_R$. En effet, les différents canaux, ou plus exactement les temps bits des différents canaux, à chaque intervalle $Z_R$, présentent les mêmes décalages temporels.

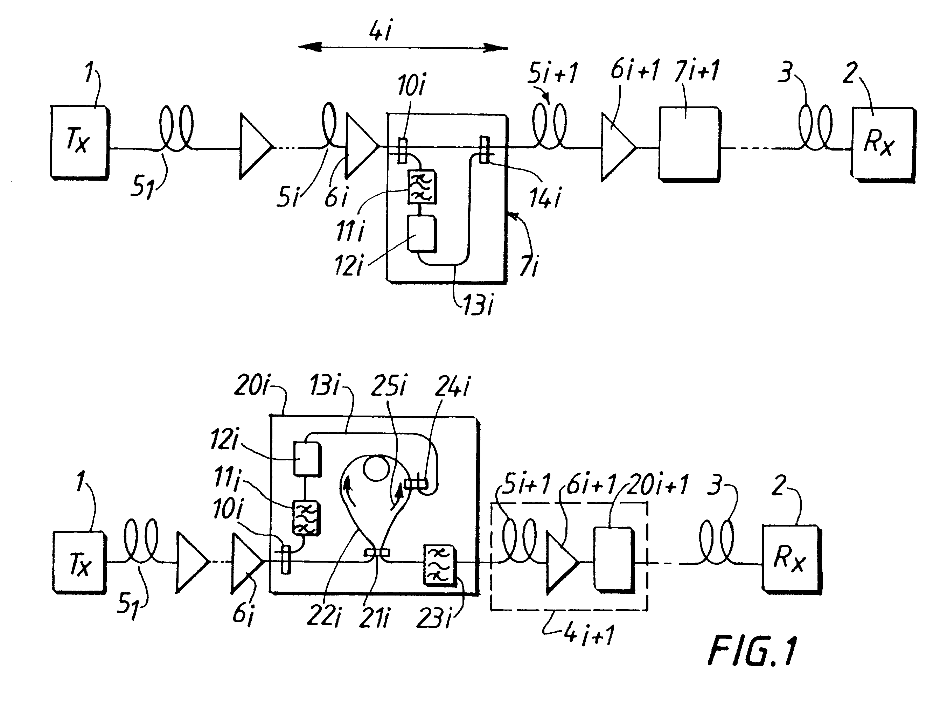

La figure 1 montre un premier mode de réalisation de l'invention, dans le cas où l'on utilise pour la modulation optique distribuée l'effet Kerr dans la fibre de transmission. Le système de transmission de la figure 1 comprend un émetteur Tx 1, un récepteur Rx 2 relié à un tronçon de fibre 3, et n tronçons $4_i$, i= 1 à n. L'émetteur 1 émettant vers le premier tronçon i = 1 des impulsions solitons, dans différents canaux d'un multiplex de longueur d'onde, à des longueurs d'onde $\lambda_1$ à $\lambda_n$. Les différentes longueurs d'onde sont choisies suivant un schéma d'allocation des fréquence assurant, pour un intervalle $Z_R$ donné, un glissement relatif entre les différents canaux sensiblement égal à un multiple du temps bit. Le dernier tronçon i = n est relié à la fibre 3 qui transmet les impulsions solitons au récepteur 3.

Chaque tronçon $4_i$ comprend une longueur de fibre $5_i$, dont la sortie est reliée à un amplificateur $6_i$; la sortie de l'amplificateur constitue l'entrée du dispositif de modulation optique $7_i$. La sortie de celui ci est reliée à la fibre $5_{i+1}$ du tronçon suivant, ou pour le tronçon n, à la fibre 3. La longueur d'un tronçon correspond de préférence à l'intervalle $Z_R$, de sorte à pouvoir procéder à une modulation à l'extrémité de chacun des tronçons, si nécessaire.

On décrit maintenant plus en détail la structure du dispositif de modulation optique $7_i$. Dans le mode de réalisation de la figure 1, la modulation est une modulation optique distribuée par effet Kerr dans la fibre de transmission. La sortie de l'amplificateur est directement reliée à la fibre $5_{i+1}$ du tronçon suivant. Le dispositif comprend des moyens pour filtrer une partie d'un desdits canaux, typiquement un coupleur $10_i$, prélevant sur la fibre en sortie $5_{i+1}$ de l'amplificateur une partie du signal; le signal prélevé est fourni à un filtre $11_i$, qui isole un des canaux, par exemple le premier canal.

Le signal ainsi filtré du canal 1 est fourni à des moyens de récupération d'une horloge $12_i$, qui fournissent en sortie sur une fibre $13_i$ un signal d'horloge, à la fréquence bit, et décalé par rapport au signal soliton du premier canal d'une quantité $\Delta_1$. Le signal d'horloge de la fibre $13_i$ est couplé dans la fibre $5_{i+1}$ par un coupleur $14_i$, et module les signaux solitons des différents canaux du multiplex. Le dispositif de récupération d'horloge peut être réalisée par tout moyen connu de l'homme du métier.

Comme expliqué plus haut, il est possible de prévoir un dispositif de modulation à chaque intervalle $Z_R$, i.e. dans le cas de la figure 1, pour chaque tronçon. Il est clair que ceci n'est pas obligatoire. On peut aussi faire varier la position relative de l'amplificateur $6_i$ et du dispositif de modulation, comme cela apparaîtra clairement à l'homme du métier. On peut aussi faire varier le nombre des amplificateurs, i.e. ne pas disposer un amplificateur sur chaque tronçon, ou en prévoir plus d'un par tronçon.

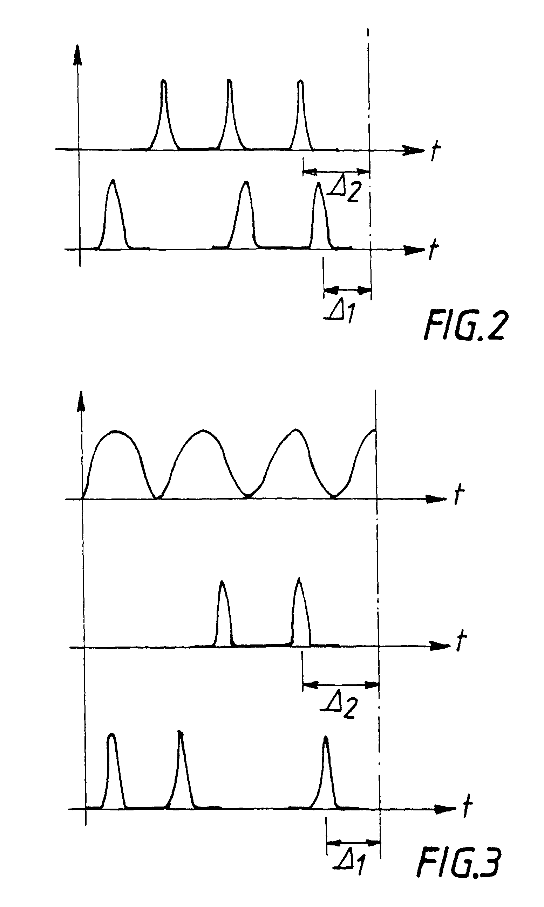

La figure 2 montre schématiquement de bas en haut l'allure des différents signaux solitons sur les canaux 1 et 2, à l'émission. Comme expliqué plus haut, ces deux signaux présentent respectivement un décalage $\Delta_1$, $\Delta_2$ par rapport à une référence temporelle représentée en traits pointillés sur la figure. La figure 3 montre schématiquement de bas en haut, l'allure des différents signaux solitons sur les canaux 1 et 2, au niveau du répéteur i, ainsi que l'allure de l'horloge. La figure 3, pour ce qui est des signaux sur les canaux 1 et 2, est analogue à la figure 2, du fait du choix du schéma d'allocation des longueurs d'onde, étant entendu que ceci est assuré par un décalage relatif des temps bits entre les canaux. L'horloge est un signal sinusoïdal à la fréquence bit, centré sur la référence temporelle.

La figure 4 montre un deuxième mode de réalisation de l'invention, dans le cas où l'on utilise pour la modulation optique distribuée un miroir non-linéaire en boucle. La figure 4 comprend les mêmes éléments 1, 2, 3, $4_i$, $5_i$, et $6_i$ que la figure 1. Toutefois, dispositif de modulation $20_i$ comprend un miroir non-linéaire en boucle. La sortie de l'amplificateur est reliée au coupleur optique $21_i$ d'entrée d'un miroir non-linéaire $22_i$ ("non-linear optical mirror" ou, NOLM) à fibre optique. Le coupleur $21_i$ présente un taux de couplage $\eta/1\text{-}\eta$. Le signal soliton est couplé dans le NOLM $22_i$, et est séparé en deux signaux se propageant en sens inverse, comme indiqué par les flèches, et est recombiné au niveau du coupleur $21_i$, et est réfléchi en sortie du coupleur $21_i$. Le signal de sortie est fourni à un filtre $23_i$; la sortie du filtre $23_i$ est reliée à la fibre $5_{i+1}$.

Le NOLM assure la modulation du signal soliton par une horloge. Cette horloge peut être obtenue, comme dans le dispositif de la figure 1 par filtrage d'une partie desdits canaux, et récupération d'horloge. On peut utiliser, comme dans la figure 1, un coupleur $10_i$, prélevant sur la fibre en sortie de l'amplificateur une partie du signal; le signal prélevé est fourni à un filtre $11_i$, qui isole un des canaux, par exemple le premier canal. Le signal ainsi filtré du canal 1 est fourni à des moyens de récupération d'une horloge $12_i$, qui fournissent en sortie sur une fibre $13_i$ un signal d'horloge, à la moitié de la fréquence bit, et décalé par rapport au signal soliton du premier canal d'une quantité $\Delta_1$. Le dispositif de récupération d'horloge peut être réalisée par tout moyen connu de l'homme du métier.

Le signal d'horloge de la fibre $13_i$ est couplé dans le NOLM $22_i$ par un coupleur $24_i$, dans le sens indiqué par la flèche $25_i$. L'horloge module les signaux solitons des différents canaux du multiplex. Pour plus de précisions sur le fonctionnement d'un NOLM comme modulateur, on se rapportera avantageusement à l'article de S. Bigo et al., IEE Electronics Letters, vol. 31 n° 2, p. 2191-2193, ou à l'article de S. Bigo et al., Optics Letters, vol. 21 n° 18, p. 1463-1465.

En sortie du NOLM, le filtre $23_i$ isole l'horloge et laisse passer vers la fibre $5_{i+1}$ les signaux solitons modulés.

On peut aussi prévoir que l'horloge est couplée dans le NOLM en deux positions symétriques, et dans les deux sens de propagation. Pour cela, on prévoit par exemple entre les moyens de récupération d'horloge $12_i$ et le coupleur $24_i$ un coupleur présentant un taux de couplage 50/50, qui sépare le signal de sortie des moyens $12_i$ en une première horloge et une deuxième horloge. La première horloge est couplée dans le NOLM comme dans le montage de la figure 4, et la deuxième horloge est couplée dans le NOLM, après avoir subi une inversion de phase, dans un sens de propagation inverse de celui de la première horloge, Pour assurer que les première et deuxième horloges sont en opposition de phase, on peut prévoir une différence appropriée entre la longueur de fibre, ou une ligne à retard optique, ou encore adapter les moyens de récupération d'horloge pour directement fournir les deux horloges. Pour plus de précision sur le fonctionnement du NOLM dans cette configuration, on pourra consulter l'article de S. Bigo et al., Optics Letters, vol. 21 n° 18, p. 1463-1465.

On peut aussi prévoir d'autres configurations, par exemple celle décrite dans une communication de D. Sandel et al., Optical Fibers Communications 1994, FG2 p. 310: le coupleur d'entrée du NOLM est un coupleur 3/3, au lieu d'un coupleur 2/2 comme le coupleur de la figure 4. Le signal soliton à moduler arrive sur l'entrée du milieu du coupleur 3/3. La boucle du NOLM est reliée aux première et troisième sortie du coupleur, et le signal modulé est transmis par la troisième entrée du coupleur. On utilise pour un tel montage une horloge à la fréquence bit des solitons.

Dans tous ces cas, le NOLM fonctionne comme dispositif de modulation optique distribuée, et assure la modulation des signaux des différents canaux du multiplex. Du fait du choix des décalages temporels entre l'horloge et les différents canaux, le glissement ne constitue pas un problème.

Dans les modes de réalisation de l'invention décrits en référence aux figures 1 à 4, il est possible que la modulation optique distribuée provoque un affaiblissement non-uniforme des signaux des différents canaux du multiplex; les signaux des canaux pour lesquels le glissement est le plus important peuvent être plus affaiblis que les signaux des autres canaux. Ceci ne devrait pas en règle générale constituer un problème. En tout état de cause, il est possible de pallier ce manque d'uniformité de l'affaiblissement par différents moyens. On peut tout d'abord prévoir dans le système de transmission au moins un filtre présentant une fonction de transfert qui compense l'affaiblissement relatif des différents canaux. Dans ce cas, on choisira une fonction de transfert du filtre avec un gain plus important pour les longueurs d'onde des canaux dont le glissement est le plus important. On peut pour cela utiliser un filtre de Bragg, par exemple immédiatement après le modulateur. Dans une configuration avec un NOLM, on peut aussi adapter la fonction de transfert du filtre $23_i$ de sortie du NOLM, qui a pour fonction de filtrer l'horloge.

Il est aussi possible de prévoir dans le système de transmission des filtres étroits assurant le guidage des impulsions solitons, et qui compensent dans une certaine mesure la non-uniformité de l'affaiblissement. On pourra par exemple utiliser des filtres de Fabry Perot, qui sont bien adaptés au multiplexage de longueurs d'onde.

La modulation optique selon l'invention peut aussi avoir pour effet de réduire la profondeur de modulation sur les canaux présentant le glissement le plus important. Cet effet n'est pas gênant pour le traitement de régénération.

Bien entendu, la présente invention n'est pas limitée aux exemples et modes de réalisation décrits et représentés, mais elle est susceptible de nombreuses variantes accessibles à l'homme de l'art. Ainsi, il est clair que d'autres systèmes de modulation optiques distribuée que ceux décrits peuvent être utilisés, comme par exemple d'autres montages du NOLM. On peut prélever le signal servant à la récupération d'horloge non seulement sur le premier canal, mais en fait sur n'importe quel canal ou combinaison de canaux. Enfin, le schéma d'allocation de longueurs d'onde n'est aucunement limité aux exemples décrits. Il faut aussi noter que l'on peut, par rapport aux modes de réalisation décrits, ajouter ou enlever des filtres ou des amplificateurs, en fonction des besoins. L'invention est particulièrement avantageuse dans sa configuration décrite en référence à la figure 1, dans la mesure où l'on utilise pour la modulation la fibre de transmission elle-même. On pourrait aussi utiliser d'autres moyens de récupération d'horloge, et par exemple utiliser un oscillateur local commandé en tension avec une boucle de verrouillage de phase, ou tout autre moyen connu.

**Revendications**

1. Un système de transmission à fibre optique à signaux solitons et à multiplexage de longueur d'onde, dans lequel les différentes longueurs d'onde ($\lambda_1$ à $\lambda_n$) du multiplex sont choisies de sorte à assurer, sur un intervalle ($Z_R$) donné, un glissement relatif entre les différents canaux sensiblement égal à un multiple du temps bit (1/B),

   caractérisé en ce qu'en au moins un point du système de transmission, les impulsions solitons des différents canaux présentent par rapport à une référence donnée un décalage temporel tel que, lors d'une modulation optique distribuée par une horloge introduite audit point, pour chaque canal, l'extremum du profil de phase non linéaire induit par l'horloge, intégré sur la longueur de modulation, coïncide avec le centre du temps bit.

2. Un système de transmission selon la revendication 1, caractérisé en ce que pour toute longueur d'onde $\lambda_i$ du multiplex, la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

   avec $k_i$ un entier dépendant du canal, et T le temps bit.

3. Un système de transmission selon la revendication 1 ou 2, caractérisé par au moins deux dispositifs ($7_i$) de modulation optique distribuée séparés le long du système de transmission par une distance multiple dudit intervalle ($Z_R$).

4. Un système de transmission selon la revendication 3, caractérisé en ce que le dispositif de modulation optique comprend

   - des moyens ($10_i$, $11_i$) pour filtrer une partie desdits canaux
   - des moyens ($12_i$) de récupération d'une horloge sinusoïdale à partir du signal filtré, et
   - des moyens ($14_i$) pour coupler l'horloge dans la fibre.

5. Un système de transmission selon la revendication 4, caractérisé en ce que le décalage temporel $\Delta_i$ pour chaque canal i est donnée par la formule:

$$\Delta_i = \frac{-1}{2\pi B}\left\{\arctan\left[\frac{\sin(2\pi B\tau_i)}{\cos(2\pi B\tau_i) - 1/\Gamma}\right] - \arctan\left[\frac{2\pi B\tau_i}{Ln(\Gamma)}\right]\right\}$$

   dans laquelle $\Gamma$ représente la perte totale dans la fibre sur la longueur de l'intervalle $Z_R$; et $\tau_i$ représente le glissement relatif entre le canal i et l'horloge sur l'intervalle $Z_R$, normalisé par le débit bit B.

6. Un système de transmission selon la revendication 3, caractérisé en ce que le dispositif de modulation optique ($20_i$) comprend

- des moyens ($10_i$, $11_i$) pour filtrer une partie desdits canaux
- des moyens ($12_i$) de récupération d'une horloge sinusoïdale à partir du signal filtré, et
- un miroir non linéaire en boucle ($22_i$) dans lequel passent les signaux solitons des différents canaux, et
- des moyens ($24_i$) pour coupler l'horloge dans le miroir non linéaire en boucle.

**7.** Un système de transmission selon la revendication 4, caractérisé en ce que le décalage temporel $\Delta_i$ pour chaque canal i est donnée par la formule:

$$\Delta_i = \frac{-1}{\pi B}\left\{ \arctan\left[ \frac{\sin(\pi B \tau_i)}{\cos(\pi B \tau_i) - 1/\Gamma} \right] - \arctan\left[ \frac{\pi B \tau_i}{Ln(\Gamma)} \right] \right\}$$

dans laquelle $\Gamma$ représente la perte totale dans la fibre du miroir; et $\tau_i$ représente le glissement relatif entre le canal i et l'horloge dans le miroir, normalisé par le débit bit B.

**8.** Un système de transmission selon l'une des revendications 3 à 7, caractérisé par au moins un filtre présentant une fonction de transfert compensant l'affaiblissement relatif des différents canaux provoqué par la modulation dans le dispositif de modulation optique.

**9.** Un système de transmission selon la revendication 8, caractérisé en ce que le filtre est un filtre de Bragg.

**10.** Un système de transmission selon les revendications 6 ou 7, en combinaison avec la 8, caractérisé en ce que chaque filtre ($23_i$) est disposé en sortie d'un miroir non-linéaire en boucle et assure en outre la séparation des signaux solitons et de l'horloge.

**11.** Un système de transmission selon l'une des revendications 1 à 10, caractérisé par au moins un filtre guidant.

**12.** Procédé de transmission dans un système à fibre optique à signaux solitons et à multiplexage de longueur d'onde, dans lequel les différentes longueurs d'onde du multiplex sont choisies de sorte à assurer, sur un intervalle ($Z_R$) donné, un glissement relatif entre les différents canaux sensiblement égal à un multiple du temps bit (1/B), caractérisé par l'émission des impulsions solitons des différents canaux de sorte qu'en au moins un point du système de transmission, elles présentent, par rapport à une référence donnée un décalage temporel tel que, lors d'une modulation optique distribuée par une horloge introduite audit point, pour chaque canal, l'extremum du profil de phase non-linéaire induit par l'horloge, intégré sur la longueur de modulation, coïncide avec le centre du temps bit.

**13.** Un procédé de transmission selon la revendication 12, caractérisé en ce que pour toute longueur d'onde $\lambda_i$ du multiplex, la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

$k_i$ étant un entier dépendant du canal.

**14.** Un procédé de transmission selon la revendication 12 ou 13, caractérisé par au moins une étape de modulation optique distribuée, à une distance dudit point multiple de l'intervalle ($Z_R$).

**15.** Un procédé de transmission selon la revendication 14, caractérisé en ce que l'étape de modulation optique comprend une modulation optique distribuée dans un miroir non-linéaire en boucle ($22_i$), ou dans la fibre de transmission, à l'aide d'une horloge sinusoïdale.

**16.** Un procédé de transmission selon la revendication 15, caractérisé en ce que l'étape de modulation optique comprend une modulation optique distribuée dans la fibre de transmission, et en ce que le décalage temporel $\Delta_i$ pour chaque canal i est donné par la formule:

$$\Delta_i = \frac{-1}{2\pi B}\left\{\arctan\left[\frac{\sin(2\pi B\tau_i)}{\cos(2\pi B\tau_i) - 1/\Gamma}\right] - \arctan\left[\frac{2\pi B\tau_i}{Ln(\Gamma)}\right]\right\}$$

dans laquelle $\Gamma$ représente la perte totale dans la fibre sur la longueur de l'intervalle $Z_R$; et $\tau_i$ représente le glissement relatif entre le canal i et l'horloge sur l'intervalle $Z_R$, normalisé par le débit bit B.

**17.** Un procédé de transmission selon la revendication 15, caractérisé en ce que l'étape de modulation optique comprend une modulation optique distribuée un miroir non-linéaire en boucle, et en ce que le décalage temporel $\Delta_i$ pour chaque canal i est donné par la formule:

$$\Delta_i = \frac{-1}{\pi B}\left\{\arctan\left[\frac{\sin(\pi B\tau_i)}{\cos(\pi B\tau_i) - 1/\Gamma}\right] - \arctan\left[\frac{\pi B\tau_i}{Ln(\Gamma)}\right]\right\}$$

dans laquelle $\Gamma$ représente la perte totale dans la fibre du miroir; et $\tau_i$ représente le glissement relatif entre le canal i et l'horloge dans le miroir, normalisé par le débit bit B.

**18.** Un procédé de transmission selon l'une des revendications 14 à 17, caractérisé par au moins une étape de filtrage du signal par un filtre présentant une fonction de transfert compensant l'affaiblissement relatif des différents canaux provoqué par l'étape de modulation.

**Claims**

**1.** A wavelength-division multiplex fiber optic soliton signal transmission system in which the wavelengths ($\lambda_1$ to $\lambda_n$) of said multiplex are chosen to assure a relative slippage between the various channels at a given interval (ZR) substantially equal to a multiple of the bit time 1/B, characterized in that at one point of said transmission system at least, the soliton pulses of the various channels have a temporal offset relative to a given reference such that, on distributed optical modulation by a clock that is input at said point, for each channel, the extremum of the non-linear phase profile induced by said clock, integrated over the modulation length, coincides with the center of the bit time.

**2.** A transmission system according to claim 1 characterized in that, for any wavelength $\lambda_i$ of said multiplex, the difference $\delta\tau_i$ between the slippage per unit length on the channel $\underline{i}$ and on the first channel satisfies the equation:

$$(k_i.T - T/4) < \delta\tau_i.Z_R < (k_i.T + T/4)$$

where $k_i$ is an integer dependent on the channel and T is said bit time.

**3.** A transmission system according to claim 1 or 2, characterized in that at least two distributed optical modulator devices (7i) along said transmission system and separated by a distance that is a multiple of said interval ($Z_R$).

**4.** A transmission system as claimed in claim 3, characterized in that said optical modulator device comprises:

- means (10i, 11i) for filtering some of said channels,
- means (12i) for recovering a sinusoidal clock from the filtered signal, and
- means (14i) for coupling said clock into said fiber.

**5.** A transmission system according to claim 4, characterized in that said temporal offset $\Delta_i$ for each channel $\underline{i}$ is given by the equation:

$$\Delta i = \frac{-1}{2\pi B}\left\{ \arctan\left[\frac{\sin(2\pi B\tau i)}{\cos(2\pi B\tau i) - 1/\Gamma}\right] - \arctan\left[\frac{2\pi B\tau i}{Ln(\Gamma)}\right]\right\}$$

in which $\Gamma$ represents the total loss in the fiber over the length of said interval $Z_R$ and $\tau_i$ represents the relative slippage between said channel $\underline{i}$ and said clock over said interval $Z_R$ normalized by the bit rate B.

6. A transmission system according to claim 3, characterized in that said optical modulator device (20i) comprises:

   - means (10i, 11i) for filtering some of said channels,
   - means (12i) for recovering a sinusoidal clock from the filtered signal,
   - a non-linear optical loop mirror (22i) into which said soliton signals of said various channels pass, and
   - means (24i) for coupling said clock into said non-linear optical loop mirror.

7. A transmission system according to claim 4, characterized in that said temporal offset $\Delta_i$ for each channel $\underline{i}$ is given by the equation:

$$\Delta i = \frac{-1}{\pi B}\left\{ \arctan\left[\frac{\sin(\pi B\tau i)}{\cos(\pi B\tau i) - 1/\Gamma}\right] - \arctan\left[\frac{\pi B\tau i}{Ln(\Gamma)}\right]\right\}$$

in which r represents the total loss in the fiber of said mirror and $\tau_i$ represents the relative slippage between said channel $\underline{i}$ and said clock in said mirror normalized by said bit rate B.

8. A transmission system according to any of claims 3 to 7, characterized by at least one filter having a transfer function compensating relative attenuation of said channels caused by modulation in said optical modulator device.

9. A transmission system according to claim 8, characterized in that said filter is a Bragg filter.

10. A transmission system according to claim 6 or claim 7 in conjunction with claim 8, characterized in that each filter (23i) is disposed at the output of a non-linear optical loop mirror and additionally separates said soliton signals and said clock.

11. A transmission system according to any one of claims 1 to 10, characterized by at least one guiding filter.

12. A transmission method in a wavelength-division multiplex fiber optic soliton signal system wherein the wavelengths of said multiplex are chosen to assure a relative slippage between the channels at a given interval ($Z_R$) substantially equal to a multiple of the bit time (1/B), the soliton pulses of the various channels being transmitted so that at one point at least of said transmission system they have a temporal offset relative to a given reference such that on distributed optical modulation by a clock that is input at said point, for each channel, the extremum of the non-linear phase profile induced by said clock, integrated over the modulation length, coincides with the center of the bit time.

13. A transmission method according to claim 12, characterized in that for any wavelength $\lambda_i$ of said multiplex the difference $\delta\tau_i$ between the slippage per unit length on said channel $\underline{i}$ and on said first channel satisfies the equation:

$$(k_i.T - T/4) < \delta\tau_i.Z_R < (k_i.T + T/4)$$

in which $k_i$ is an integer dependent on the channel.

14. A transmission method according to claim 12 or 13, characterized by at least one distributed optical modulation step executed at a distance from said point that is a multiple of said interval ($Z_R$).

15. A transmission method according to claim 14, characterized in that said optical modulation step includes distributed optical modulation in a non-linear optical loop mirror (22i) or in the transmission fiber by means of a sinusoidal clock.

**16.** A transmission method according to claim 15, characterized in that said optical modulation step includes distributed optical modulation in the transmission fiber and in that the temporal offset $\Delta_i$ for each channel $\underline{i}$ is given by the equation:

$$\Delta i = \frac{-1}{2\pi B}\left\{ \arctan\left[\frac{\sin(2\pi B\tau i)}{\cos(2\pi B\tau i) - 1/\Gamma}\right] - \arctan\left[\frac{2\pi B\tau i}{Ln(\Gamma)}\right]\right\}$$

in which r represents the total loss in the fiber over the length of the interval $Z_R$ and $\tau_i$ represents the relative slippage between said channel $\underline{i}$ and the clock over the interval $Z_R$ normalized by the bit rate B.

**17.** A transmission method according to claim 15, characterized in that said optical modulation step includes distributed optical modulation by a non-linear optical loop mirror and said temporal offset $\Delta_i$ for each channel $\underline{i}$ is given by the equation:

$$\Delta i = \frac{-1}{\pi B}\left\{ \arctan\left[\frac{\sin(\pi B\tau i)}{\cos(\pi B\tau i) - 1/\Gamma}\right] - \arctan\left[\frac{\pi B\tau i}{Ln(\Gamma)}\right]\right\}$$

in which r represents the total loss in the fiber of the mirror and $\tau_i$ represents the relative slippage between said channel $\underline{i}$ and said clock in said mirror normalized by the bit rate B.

**18.** A transmission method according to any one of claims 14 to 17, characterized by
at least one step of filtering the signal by a filter having a transfer function compensating relative attenuation of the channels caused by said modulation step.

## Patentansprüche

**1.** Übertragungssystem mit optischer Faser mit Solitonsignalen und Wellenlängenmultiplexierung, bei welchem die verschiedenen Wellenlängen ($\lambda_1$ bis $\lambda_n$) des Multiplexes so gewählt werden, daß auf einem gegebenen Intervall ($Z_R$) ein relatives Gleiten zwischen den verschiedenen Kanälen im wesentlichen gleich einem Vielfachen der Bitzeit (1/B) sichergestellt wird,
dadurch gekennzeichnet, daß an wenigstens einem Punkt des Übertragungssystems die Solitonpulse der verschiedenen Kanäle hinsichtlich eines gegebenen Bezugspunktes eine zeitliche Verschiebung aufweisen, so daß bei einer verteilten optischen Modulation durch einen an diesem Punkt eingeführten Zeitgeber für jeden Kanal der Extremwert des vom Zeitgeber induzierten, nichtlinearen Phasenprofils, integriert über die Modulationslänge, mit dem Zentrum der Bitzeit zusammenfällt.

**2.** Übertragungssystem nach Anspruch 1, dadurch gekennzeichnet, daß die Differenz $\delta\tau_i$ zwischen dem Gleiten pro Längeneinheit auf dem Kanal i und auf dem ersten Kanal für jede Wellenlänge $\lambda_i$ des Multiplexes die Beziehung

$$(k_i.T - T/4) < \delta\tau_i.Z_R < (k_i.T + T/4)$$

erfüllt, wobei $k_i$ eine vom Kanal abhängige ganze Zahl und T die Bitzeit ist.

**3.** Übertragungssystem nach Anspruch 1 oder 2, gekennzeichnet durch wenigstens zwei Vorrichtungen ($7_i$) zur verteilten optischen Modulation, die entlang des Übertragungssystems durch einen Abstand getrennt sind, der ein Vielfaches des Intervalls ($Z_R$) ist.

**4.** Übertragungssystem nach Anspruch 3, dadurch gekennzeichnet, daß die Vorrichtung zur optischen Modulation umfaßt:

- Mittel ($10_i$, $11_i$) zum Filtern eines Teils der Kanäle,
- Mittel ($12_i$) zur Wiederherstellung eines sinusförmigen Zeitgebers ausgehend vom gefilterten Signal und

- Mittel ($14_i$) zum Einkoppeln des Zeitgebers in die Faser.

5. Übertragungssystem nach Anspruch 4, dadurch gekennzeichnet, daß die zeitliche Verschiebung $\Delta_i$ für jeden Kanal i durch die Formel

$$\Delta_i = \frac{-1}{2\pi B} \left\{ \arctan\left[\frac{\sin(2\pi B \tau_i)}{\cos(2\pi B \tau_i) - 1/\Gamma}\right] - \arctan\left[\frac{2\pi B \tau_i}{Ln(\Gamma)}\right] \right\}$$

gegeben ist, in welcher $\Gamma$ den Gesamtverlust in der Faser über die Länge des Intervalls $Z_R$ darstellt; und $\tau_i$ das relative Gleiten zwischen dem Kanal i und dem Zeitgeber auf dem Intervall $Z_R$, normiert durch die Bitdatenrate B, darstellt.

6. Übertragungssystem nach Anspruch 3, dadurch gekennzeichnet, daß die Vorrichtung ($20_i$) zur optischen Modulation umfaßt

- Mittel ($10_i$, $11_i$) zum Filtern eines Teils der Kanäle,
- Mittel ($12_i$) zur Wiederherstellung eines sinusförmigen Zeitgebers ausgehend vom gefilterten Signal, und
- einen nichtlinearen Schleifenspiegel (22i), in welchen die Solitonsignale der verschiedenen Kanäle hineingehen, und
- Mittel ($24_i$) zum Einkoppeln des Zeitgebers in den nichtlinearen Schleifenspiegel.

7. Übertragungssystem nach Anspruch 4, dadurch gekennzeichnet, daß die zeitliche Verschiebung $\Delta_i$ für jeden Kanal i durch die Formel

$$\Delta_i = \frac{-1}{\pi B} \left\{ \arctan\left[\frac{\sin(\pi B \tau_i)}{\cos(\pi B \tau_i) - 1/\Gamma}\right] - \arctan\left[\frac{\pi B \tau_i}{Ln(\Gamma)}\right] \right\}$$

gegeben ist, in welcher $\Gamma$ den Gesamtverlust in der Faser des Spiegels darstellt; und $\tau_i$ das relative Gleiten zwischen dem Kanal i und dem Zeitgeber im Spiegel, normiert durch die Bitdatenrate B, darstellt.

8. Übertragungssystem nach einem der Ansprüche 3 bis 7, gekennzeichnet durch wenigstens ein Filter, das eine Transferfunktion aufweist, die die durch die Modulation in der Vorrichtung zur optischen Modulation hervorgerufene relative Abschwächung der verschiedenen Kanäle kompensiert.

9. Übertragungssystem nach Anspruch 8, dadurch gekennzeichnet, daß das Filter ein Bragg-Filter ist.

10. Übertragungssystem nach den Ansprüchen 6 oder 7 in Kombination mit 8, dadurch gekennzeichnet, daß jedes Filter ($23_i$) am Ausgang eines nichtlinearen Schleifenspiegels angeordnet ist und außerdem die Trennung der Solitonsignale und des Zeitgebers sicherstellt.

11. Übertragungssystem nach einem der Ansprüche 1 bis 10, gekennzeichnet durch wenigstens ein Führungsfilter.

12. Verfahren zur Übertragung in einem System mit optischer Faser mit Solitonsignalen und Wellenlängenmultiplexierung, bei welchem die verschiedenen Wellenlängen des Multiplexes so gewählt werden, daß auf einem gegebenen Intervall ($Z_R$) ein relatives Gleiten zwischen den verschiedenen Kanälen im wesentlichen gleich einem Vielfachen der Bitzeit (1/B) sichergestellt wird, gekennzeichnet durch das Aussenden von Solitonpulsen für die verschiedenen Kanäle, so daß sie an wenigstens einem Punkt des Übertragungssystems hinsichtlich eines gegebenen Bezugspunktes eine zeitliche Verschiebung aufweisen, so daß bei einer verteilten optischen Modulation durch einen an diesem Punkt eingeführten Zeitgeber für jeden Kanal der Extremwert des vom Zeitgeber induzierten, nichtlinearen Phasenprofils, integriert über die Modulationslänge, mit dem Zentrum der Bitzeit zusammenfällt.

13. Übertragungsverfahren nach Anspruch 12, dadurch gekennzeichnet, daß die Differenz $\delta\tau_i$ zwischen dem Gleiten pro Längeneinheit auf dem Kanal i und auf dem ersten Kanal für jede Wellenlänge $\lambda_i$ des Multiplexes die Beziehung

$$(k_i.T - T/4) < \delta\tau_i.Z_R < (k_i.T + T/4)$$

erfüllt, wobei $k_i$ eine vom Kanal abhängige ganze Zahl ist.

14. Übertragungsverfahren nach Anspruch 12 oder 13, gekennzeichnet durch wenigstens einen Schritt der verteilten optischen Modulation bei einem Abstand von diesem Punkt, der ein Vielfaches des Intervalls ($Z_R$) ist.

15. Übertragungsverfahren nach Anspruch 14, dadurch gekennzeichnet, daß der Schritt der optischen Modulation eine verteilte optische Modulation mit Hilfe eines sinusförmigen Zeitgebers in einem nichtlinearen Schleifenspiegel ($22_i$) oder in der Übertragungsfaser umfaßt.

16. Übertragungsverfahren nach Anspruch 15, dadurch gekennzeichnet, daß der Schritt der optischen Modulation eine verteilte optische Modulation in der Übertragungsfaser umfaßt und daß die zeitliche Verschiebung $\Delta_i$ für jeden Kanal i durch die Formel

$$\Delta_i = \frac{-1}{2\pi B}\left\{\arctan\left[\frac{\sin(2\pi B\tau_i)}{\cos(2\pi B\tau_i) - 1/\Gamma}\right] - \arctan\left[\frac{2\pi B\tau_i}{Ln(\Gamma)}\right]\right\}$$

gegeben ist, in welcher $\Gamma$ den Gesamtverlust in der Faser über die Länge des Intervalls $Z_R$ darstellt; und $\tau_i$ das relative Gleiten zwischen dem Kanal i und dem Zeitgeber auf dem Intervall $Z_R$, normiert durch die Bitdatenrate B, darstellt.

17. Übertragungsverfahren nach Anspruch 15, dadurch gekennzeichnet, daß der Schritt der optischen Modulation eine verteilte optische Modulation in einem nichtlinearen Schleifenspiegel umfaßt und daß die zeitliche Verschiebung $\Delta_i$ für jeden Kanal i durch die Formel

$$\Delta_i = \frac{-1}{\pi B}\left\{\arctan\left[\frac{\sin(\pi B\tau_i)}{\cos(\pi B\tau_i) - 1/\Gamma}\right] - \arctan\left[\frac{\pi B\tau_i}{Ln(\Gamma)}\right]\right\}$$

gegeben ist, in welcher $\Gamma$ den Gesamtverlust in der Faser des Spiegels darstellt; und $\tau_i$ das relative Gleiten zwischen dem Kanal i und dem Zeitgeber im Spiegel, normiert durch die Bitdatenrate B, darstellt.

18. Übertragungsverfahren nach einem der Ansprüche 14 bis 17, gekennzeichnet durch wenigstens einen Schritt zur Filterung des Signals durch ein Filter, das eine Transferfunktion aufweist, die die vom Modulationsschritt hervorgerufene relative Abschwächung der verschiedenen Kanäle kompensiert.

FIG.1

FIG.2

FIG.3